**Europäisches Patentamt**

**European Patent Office**

**Office européen des brevets**

(19)

(11) Veröffentlichungsnummer: **0 183 189 B1**

# EUROPÄISCHE PATENTSCHRIFT

(12)

(45) Veröffentlichungstag der Patentschrift: **24.04.91**

(51) Int. Cl.⁵: **F16L 47/02, B29C 65/34**

(21) Anmeldenummer: **85114786.8**

(22) Anmeldetag: **21.11.85**

(54) **Elektrisch schweissbare Muffe zum Verbinden von Rohrleitungsteilen aus thermoplastischem Kunststoff.**

(30) Priorität: **30.11.84 CH 5730/84**

(43) Veröffentlichungstag der Anmeldung:
**04.06.86 Patentblatt 86/23**

(45) Bekanntmachung des Hinweises auf die
Patenterteilung:
**24.04.91 Patentblatt 91/17**

(84) Benannte Vertragsstaaten:
**AT BE CH DE FR GB IT LI LU NL SE**

(56) Entgegenhaltungen:
**EP-A- 0 115 623**
**DE-A- 2 710 998**
**DE-A- 2 848 382**

(73) Patentinhaber: **VON ROLL AG**

**CH-4563 Gerlafingen(CH)**

(72) Erfinder: **Rüede, Ernst**
**Viaduktstrasse 20**
**CH-4512 Bellach(CH)**

(74) Vertreter: **EGLI-EUROPEAN PATENT ATTOR-
NEYS**
**Horneggstrasse 4**
**CH-8008 Zürich(CH)**

## Beschreibung

Die Erfindung betrifft eine elektrisch schweissbare Muffe zum Verbinden von Rohrleitungsteilen aus thermoplastischem Kunststoff, die einen hülsenförmigen Muffenkörper aus thermoplastischem Kunststoff, ein in dem Muffenkörper an deren Innenwand eingebettetes elektrisches Heizelement und Anschlüsse für die Zufuhr elektrischer Energie zu dem Heizelement aufweist, wobei die dem elektrischen Heizelement zugeführte elektrische Energie zur Erzeugung von Wärme zwecks Bildung einer Schmelzzone zum Verschweissen des Muffenkörpers mit den in der Schmelzzone liegenden Partien der Rohrleitungsteile dient.

Zum Verbinden von Rohrleitungsteilen aus thermoplastischem Kunststoff sind elektrisch schweissbare Muffen aus demselben oder ähnlichen thermoplastischen Kunststoff bekannt. Unter Rohrleitungsteilen werden hierbei gerade und gebogene Rohrleitungsstücke, Rohrformstücke und Rohrleitungsarmaturen verstanden. Diese Rohrleitungsteile weisen zum Verbinden mit anderen Rohrleitungsteilen rohrförmige Anschlussstutzen auf, auf die eine vorstehend erwähnte Muffe aufgeschoben und mit dieser zu einer tropf- und gasdichten Verbindung elektrisch verschweisst wird.

Elektrisch schweissbare Muffen der eingangs beschriebenen Art sind in vielen Ausführungen bekannt, von denen beispielsweise DE-A-2 710 998 (& US-A-4 117 311), DE-A-2 848 382 und EP-A-115 623 - genannt seien. Die in diesen Druckschriften beschriebenen elektrisch schweissbaren Muften weisen jedoch keine Mittel zur Gewährleistung einer ausreichenden radialen Bewegungsfreiheit des Muffenkörpers während des Schweissvorganges auf. Sie weisen zwar im stirnseitigen Bereich der Muffe an einer Stelle des Muffenumfangs eine kreisförmige Ausnehmung auf. Diese wirkt sich jedoch praktisch nicht auf die Steifigkeit der Muffe aus.

Werden für das Verbinden von Rohrleitungsteilen solche bekannte elektrisch schweissbare Muffen verwendet, hängt die Erreichung einer zuverlässigen und dichten Verbindung von verschiedenen Eigenschaften der Muffe ab. Eine besonders wichtige Eigenschaft einer schweissbaren Muffe ist ihre Fähigkeit, während ihrer beim Schweissvorgang auftretenden Erwärmung durch Freisetzen eingefrorener Spannungen zu schrumpfen, um das Spiel zwischen der schweissbaren Muffe und den zu verschweissenden Anschlussstutzen der Rohrleitungsteile aufzuheben. Hierfür ist es bekannt, dem aus einem thermoplastischen Kunststoff bestehenden Muffenkörper bei der Herstellung der Muffe eine Schrumpfreserve zu erteilen, die während der beim Schweissvorgang auftretenden Erwärmung zum Aufheben des bestehenden Spiels zwischen der Muffe und den Anschlussstutzen der Rohrleitungsteile freigesetzt wird.

Gleichzeitig mit dem Freisetzen der Schrumpfreserve und de Aufhebung des Spiels zwischen der Muffe und den Anschlussstutzen der Rohrleitungsteile entsteht während des Abkühlens der geschweissten Verbindung in der Schweisszone beim Uebergang des geschmolzenen Materiales in den festen Zustand eine Volumenkontraktion, die recht beträchtlich sein kann und beispielsweise im Falle polyolefinischer Werkstoffe etwa 20% beträgt. Reicht die dem Muffenkörper erteilte Schrumpfreserve nicht aus, um diesen Volumenschwund vollständig durch die beim Schrumpfen auftretende Formänderung zu kompensieren, entstehen in der festwerdenden Schmelzzone Hohlräume. Da die Abkühlung wegen des sich am Muffenkörper einstellenden Wärmegefälles von den Rändern der Schmelzzone her gegen die Mitte der Schmelzzone voranschreitet, wächst der Anteil des Muffenkörpers, der sich an dem in die Muffe ragenden Anschlussstutzen abstützt. Dieser dem Schrumpfen der Muffe entgegenwirkende Stützeffekt der Anschlussstutzen hat zur Folge, dass im letzten Bereich der noch nicht erstarrten Schmelzzone der Muffenkörper dem auftretenden Volumenschwund nicht vollständig folgen und diesen durch Formänderung kompensieren kann; es entstehen dann in der Mitte der Schmelzzone die Festigkeit der Muffe beeinträchtigende Hohlräume. Solche Hohlräume können besonders bei relativ dickwandigen Muffenkörpern auftreten, wie sie für des Verbinden von Rohrleitungsteilen üblich sind, die unter Druck betrieben werden.

Der Erfindung liegt die Aufgabe zugrunde, eine elektrisch schweissbare Muffe der eingangs beschriebenen Art so weiter auszugestalten, dass ein vollständiges Verschweissen des Muffenkörpers mit den Anschlussstutzen im Bereich der erstarrten Schmelzzone zuverlässig gewährleistet ist, ohne dass der Muffenkörper in den für die Montage und den Betrieb massgebenden Partien geschwächt werden müsste. Gleichzeitig soll der Muffenkörper als Anzeigemittel für den Vollzug einer Schweissoperation herangezogen werden können.

Diese Aufgabe wird gemäss der Erfindung dadurch gelöst, dass in den sich von den Muffenstirnseiten bis etwa in die Mitten der Schmelzzonen erstreckenden Randzonen des Muffenkörpers mindestens eine sich über den gesamten Umfang des Muffenkörpers erstreckende Materialaussparung angebracht ist oder mehrere über denselben verteilte Materialaussparungen angebracht sind.

Die Erfindung umfasst auch ein Verfahren zur Ausnützung der erfindungsgemässen Muffe für die Anzeige eines ·funktionsrichtigen Ablaufes des Schweissvorganges, bei dem eine Aenderung an der Stelle der Materialaussparungen des Muffenkörpers festgestellt wird. Diese Aufgabe wird gemäss der Erfindung dadurch gelöst, dass für die optische Anzeige eines funktionsrichtigen Ablaufes des Schweissvorganges zwischen dem Muffenkörper und den Rohrleitungsteilen eine Formänderung an der Stelle der Materialaussparungen durch eine Aenderung der Dimensionen, z.B. der Rillentiefe und/oder Rillenbreite festgestellt wird.

Die Erfindung ist in der Zeichnung in mehreren Ausführungsbeispielen dargestellt und nachfolgend beschrieben. Es zeigen:

Fig. 1
einen Längsschnitt einer schematisch dargestellten, auf zwei Anschlussstutzen aufgeschobenen elektrisch schweissbaren Muffe mit zwei Schmelzzonen im Zeitpunkt des Abschlusses der Energiebeschickung,

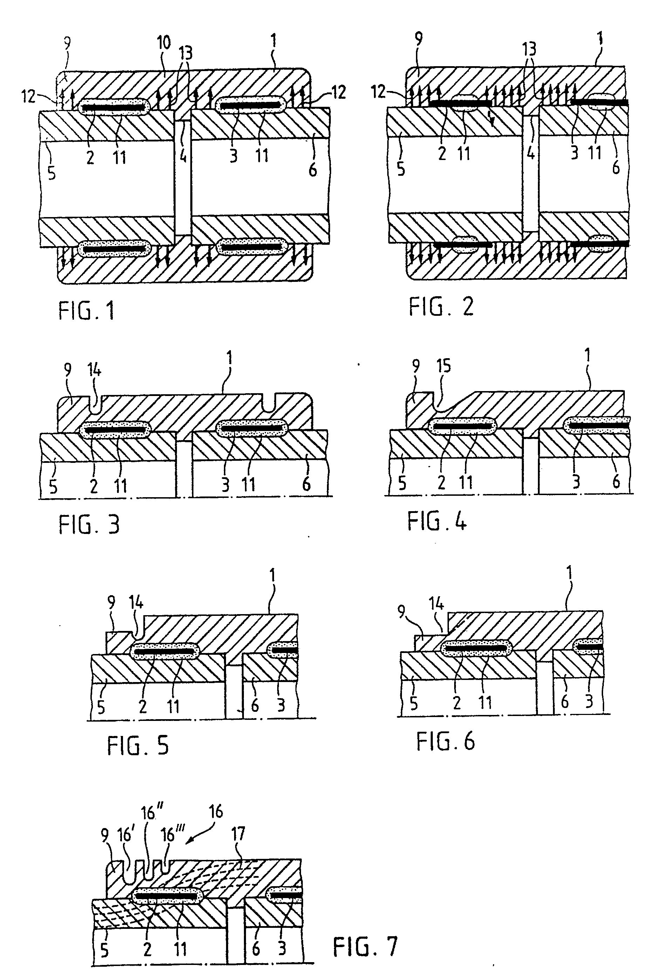

Fig. 2
einen Längsschnitt einer teilweise dargestellten Schweissmuffe nach Fig. 1 mit den Schmelzzonen in der letzten Phase der Erstarrung der durch die Energiebeschickung erzeugten Schmelze,

Fig. 3 - 13
Längsschnitte einer teilweise dargestellten Schweissmuffe nach Fig. 1 und 2, jedoch mit Materialaussparungen im Bereich der Randzonen des Muffenkörpers und der gegen die Randzonen gerichteten Schmelzzonenpartie, wobei die Materialaussparung in

| | |
|---|---|
| Fig. 3 | als Rille, |
| Fig. 4 | als Nut, |
| Fig. 5 | als Rille mit verringerter Wanddicke der Randzone, |
| Fig. 6 | als in der Wanddicke verringerte Randzone, wobei die Verringerung sich bis in den anschliessenden Schmelzzonenteil erstrecken kann, |
| Fig. 7 | als mehrfache Rille, |
| Fig. 8 | als innenwandseitige Aussparung, |
| Fig. 9 | als aussenwandseitige Aussparung, |
| Fig. 10 | als ganz durchgehende Aussparungen, |
| Fig. 11 | als unterbrochene Umfangsrille, |
| Fig. 12 | als Rille zur optischen Anzeige des Schweissvorganges mit ausgepresster Schmelze als Schweissindikator und |
| Fig. 13 | als Doppelrille mit gleicher Rillenbreite vor und ungleicher Rillenbreite nach dem Schweissvorgang, |

ausgebildet ist.

Die in Fig. 1 dargestellte elektrisch schweissbare Muffe weist einen Muffenkörper 1 und eine in der Nähe des Innenumfangsdes Muffenkörpers 1 angeordnete, in zwei Heizelemente 2, 3 unterteilte Heizvorrichtung auf. Der Muffenkörper 1 weist in der Mitte einen Steg 4 auf, der als Anschlag für zwei Anschlussstutzen 5, 6 von nicht dargestellten Rohrleitungen dient.

Die Heizelemente 2, 3 liegen im Bereich der Anschlussstutzen 5, 6 und erstrecken sich soweit, dass der äussere Teil einer Randzone 9 und eine Innenzone 10 unbeheizt bleiben. Die Heizelemente 2, 3, die hier als stark ausgezogener Strich dargestellt sind, sind meistens als Wicklung aus einem Widerstandheizdraht ausgebildet, deren Windungen mit Abstand nebeneinander angeordnet sind. Die Ausbildung der Heizelemente 2, 3 ist jedoch für die Erfindung nicht wesentlich.

Werden die Heizelemente 2, 3 über im Muffenkörper 1 angeordnete, nicht dargestellte Anschlussstellen mit elektrischer Energie beschickt, entsteht Wärme in den Heizelementen 2, 3 und damit eine punktiert dargestellte Schmelzzone 11, in welcher die Verbindung des Muffenkörpers 1 mit den Anschlussstutzen 5, 6 erfolgt. Ist eine für eine gute Verschweissung ausreichende Menge Materials des Muffenkörpers 1 und der Anschlussstutzen 5, 6 verflüssigt, wird die Energiezufuhr abgebrochen. Mit der Wärmeentwicklung in der Schmelzzone 11 wird auch die bei der Herstellung der Muffe dem Muffenkörper 1 erteilte Schrumpfreserve freigesetzt, so dass der Muffenkörper einschrumpft und sich gegen die Anschlussstutzen 5, 6 legt, die nun der weiteren Schrumpfung des Muffenkörpers 1 einen Widerstand entgegensetzen. Dieser durch Pfeile 12, 13 in Fig. 1 und 2 dargestellte Stützeffekt ist am Ende des Heizvorganges, bei dem die Schmelzzone 11 ihre grösste Ausdehnung erfährt, verhältnismässig gering, jedoch wird er nach Beendigung der Energiezufuhrimmer grösser, siehe die Pfeile 12, 13 in Fig. 2, da durch das sich einstellende Wärmegefälle von der Schmelzzone 11 nach aussen Wärme entzogen wird, so dass die Ausdehnung der Schmelzzone 11 sich laufend verkleinert. Durch die vergrösserte Stützwirkung wird das weitere Schrumpfen des Muffenkörpers 1 gehemmt; die Folge davon ist, dass im Zentrum der Schmelzzone wegen der Volumenkontraktion der erstarrenden Schmelze Hohlräume entstehen können, die die Qualität der Verschweissung vermindern.

Die Erfindung geht von der Ueberlegung aus, dass diese Hohlraumbildung vermieden werden kann, wenn in dem Muffenkörper eine Massnahme getroffen wird, durch die dem Muffenkörper 1 auch am Ende der Erstarrung der Schmelzzone seine radiale Bewegungsfreiheit und damit seine Fähigkeit zum Schrumpfen soweit erhalten bleibt, dass der Volumenschwund bis zur vollständigen Erstarrung der Schmelze wettgemacht werden kann. Diese Massnahme wird durch die Ausbildung des Muffenkörpers gemäss Fig. 3 - 13 erreicht. Der Einfachheit halber zeigen diese Figuren nur noch einen Teil der elektrisch schweissbaren Muffe und eines Anschlussstutzens.

Diese Massnahme, die eine höhere radiale Bewegungsfreiheit bewirkt, besteht im wesentlichen in einer oder mehreren Materialaussparungen, die den Versteifungseffekt der Ranzonen herabsetzen, jedoch an einer Stelle des Muffenkörpers 1, die sich für Partien, die für die Montage und den Betrieb massgebend sind, nicht fertigkeitsvermindernd auswirken kann.

In Fig. 3 wird diese Herabsetzung des Versteifungseffektes durch eine am Aussenumfang des Muffenkörpers 1 verlaufende Rille 14 erreicht, die in der Randpartie 9 im Bereich des Heizelementes 2 angeordnet ist. In Fig. 4 ist an der gleichen Stelle anstatt der Rille 14 eine Nut 15 angeordnet, deren eine Wand von der Randzone 9 sich schräg über einen Teil des Heizelementes 2 erstreckt.

In Fig. 5 ist ausser der Rille 14 die Wanddicke der Randzone 9 um einen Teil der Rillentiefe verringert, während sie in Fig. 6 bis auf den Grund der Rille 14 verringert ist. In Fig. 6 ist der Uebergang von der ursprünglichen Rille 14 zum Umfang des Muffenkörpers 1 eine Kante, kann aber, wie gestrichelt angedeutet ist, auch angeschrägt verlaufen.

In Fig. 7 ist eine Mehrfachrille 16 mit drei unterschiedlich breiten und tiefen Rillen 16', 16", 16'" angeordnet. Die Mehrfachrille 16 kann auch eine andere Zahl von Rillen aufweisen. In Figur 7 sind Linien 17 eingezeichnet, die am Beispiel einer axialen Zugbeanspruchung den Verlauf des Kraftflusses zwischen dem Muffenkörper 1 und dem Anschlussstück 5 darstellen. Wesentlich ist hierbei, dass die der Verminderung der Muffensteifigkeit dienenden Rillen 16 keine den Betrieb ungünstig beeinflussende Festigkeitsverminderung verursachen. Deshalb sind auch die Tiefe und die Lage der Aussparungen auf die Lage des Heizelementes 2 bzw. der Schmelzzone 11 abzustimmen. Ausserdem muss darauf geachtet werden, dass bereits vor dem innern Rand des Heizelementes 2 bzw. der Schmelzzone 11 die volle Dicke des Muffenkörpers 1 zum Tragen kommt. Diese wird zweckmässig mindestens so stark bemessen wie die Wanddicke der zu verschweissenden Anschlussstutzen 5, 6.

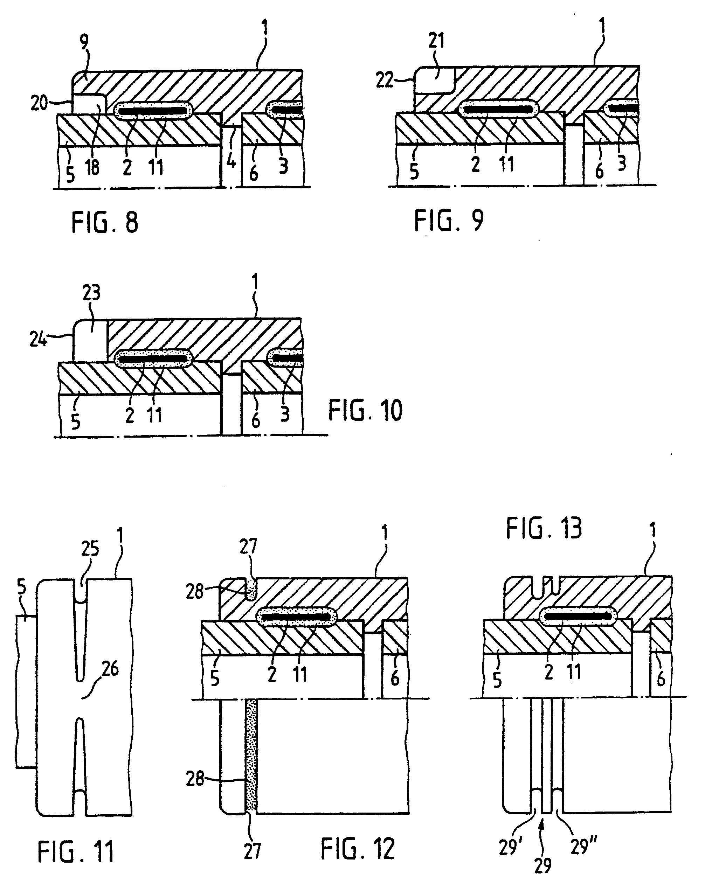

Bei der Ausführung nach Fig. 8 sind in der Randzone 9 des Muffenkörpers 1 innenwandseitige Aussparungen 18 vorgesehen, die sich bis in die Nähe des Heizelementes 2 erstrecken. Zwischen den einzelnen Aussparungen 18 in der Randzone 9 sind Führungsstege 20 angeordnet. Die Aussparungen 18 nach Fig. 8 Können auch als aussenwandseitige Aussparungen 21 nach Fig. 9 ausgebildet sein. Wird hierbei auf die Anordnung von Stegen 22 verzichtet, erhält man die Ausführung nach Fig. 6. Schliesslich können die Aussparungen Nuten 23 sein, die sich durch die ganze Wanddicke des Muffenkörpers 1 erstrecken, und durch Stegpartien 24 voneinander getrennt sind, siehe Fig. 10. Hierbei können die Nuten 23 verhältnismässig schmal sein, während die Stegpartien 24 sich über einen entsprechend grösseren Teil des Umfanges erstrecken.

Bei der Ausführung nach Fig. 11 ist eine Rille 25 im Bereich der Randzone 9 des Muffenkörpers 1 vorgesehen. Im Gegensatz zur Ausführung nach Fig. 3 erstreckt sich jedoch die Rille 25 nicht über den ganzen Muffenumfang, sondern bildet Teilrillen, die durch rillenfreie Partien 26 voneinander getrennt sind.

In Fig. 12 und 13 sind Ausführungen dargestellt, bei denen die nachgiebige Stelle gleichzeitig dazu benützt wird, eine optische Anzeige des Schweissvorganges zu erreichen. Hierzu wird bei der Ausführung nach Fig. 12 die Rille 27 so tief bemessen, dass während der Zufuhr der Schweissenergie Schmelze 28 aus der Schweisszone 11 in die Rille 27 austreten kann. Das Austreten der Schmelze 28 zeigt an, dass in der Schmelzzone 11 durch das Schrumpfen des Muffenkörpers 1 ein Ueberdruck herrscht, der eine Voraussetzung für eine einwandfreie Schweissung ist.

Bei der Ausführung nach Fig. 13 wird eine Mehrfachrillung 29 mit z.B. zwei Rillen 29', 29" gleicher Breite vorgesehen, deren Form sich beim Auftreten eines Druckes in der Schmelzzone 11 verändert, wie dies z.B. in der obern Hälfte von Fig. 13 dargestellt ist. Die beiden ursprünglich gleichen Rillen 29', 29" weichen voneinander ab, z.B. dadurch, dass die Rille 29" enger wird als die Rille 29'.

Bei den beschriebenen Ausführungen nach Fig. 3 - 13 lassen sich zwei Gruppen unterscheiden: Die eine Gruppe umfasst die Ausführungen nach Fig. 3, 4, 7, 11, 12 und 13, die alle eine stirnseitig massive Randzone 9 aufweisen. Diese massive Stirnseite kann beispielsweise als Kraftansatzstelle beim Verschieben von Muffen während der Montage benützt werden. Die andere Gruppe mit den Ausführungen nach Fig. 5, 6, 8, 9 und 10 erreicht die Vergrösserung der Nachgiebigkeit des Muffenkörpers dadurch, dass die Randzone 9 in ihrem Querschnitt am Umfang ganz oder teilweise vermindert wird, wobei sich bei den Ausführungen nach Fig. 8 und 10 die axiale Erstreckung der Aussparungen 18, 23 annähernd bis zum Rand des Heizelementes 2 erstreckt. Bei allen Ausführungen ist jedoch der Kraftfluss durch die Schweissstelle ohne Behinderung gewährleistet.

## Ansprüche

1. Elektrisch schweissbare Muffe zum Verbinden von Rohrleitungsteilen aus thermoplastischem Kunststoff, die einen hülsenförmigen Muffenkörper (1) aus thermoplastischem Kunststoff, ein in dem Muffenkörper an deren Innenwand eingebettetes elektrisches Heizelement (2, 3) und Anschlüsse für die Zufuhr elektrischer Energie zu dem Heizelement aufweist, wobei die dem elektrischen Heizelement zugeführte elektrische Energie zur Erzeugung von Wärme zwecks Bildung einer Schmelzzone (11) zum Verschweissen des Muffenkörpers mit den in der Schmelzzone liegenden Partien der Rohrleitungsteile (5, 6) dient, **dadurch gekennzeichnet, dass** in den sich von den Muffenstirnseiten bis etwa in die Mitten der Schmelzzonen (11) erstreckenden Randzonen (9) des Muffenkörpers (1) mindestens eine sich über den gesamten Umfang des Muffenkörpers erstreckende Materialaussparung (14, 15, 16) angebracht ist oder mehrere über denselben verteilte Materialaussparungen (18, 21, 23, 25) angebracht sind.

2. Muffe nach Anspruch 1, dadurch gekennzeichnet, dass die Materialaussparung aus je einer Rille (14) oder einer Nute (15) im Grenzbereich der Schmelzzone (11) bestehen.

3. Muffe nach Anspruch 2, dadurch gekennzeichnet, dass bei mehreren Rillen (16) diese mit gleicher oder unterschiedlicher Rillentiefe (16', 16'', 16''') ausgebildet sind.

4. Muffe nach Anspruch 1, dadurch gekennzeichnet, dass in den Randzonen (9) axiale Aussparungen (18, 21) oder axiale, sich durch die Wandstärke des Muffenkörpers (1) erstreckende Einschnitte (23) angeordnet sind, wobei zwischen den Aussparungen und Einschnitten Stege (20, 22, 24) liegen.

5. Muffe nach Anspruch 4, dadurch gekennzeichnet, dass die in den Randzonen (9) angeordneten Aussparungen (18, 21) und Einschnitte (23) sich bis zu den Stirnseiten des Muffenkörpers (1) erstrecken.

6. Verfahren zum Betrieb einer Muffe nach einem der Ansprüche 1 bis 5, dadurch gekennzeichnet, dass für die optische Anzeige eines funktionsrichtigen Ablaufes des Schweissvorganges zwischen dem Muffenkörper und den Rohrleitungsteilen eine Formänderung an der Stelle der Materialaussparungen durch eine Aenderung der Dimensionen, z.B. der Rillentiefe und/oder Rillenbreite, festgestellt wird.

## Claims

1. Electrically weldable socket for connecting conduit parts of thermoplastic material which has a shell-like socket body (1) of thermoplastic material, an electrical heating element (2, 3) embedded in the socket body on its inner wall and connections for the feed of electrical energy to the heating element, wherein the electrical energy fed to the electrical heating element serves to generate heat with the object of forming a melting zone (11) for welding the socket body with the portions of the conduit parts (5, 6) lying in the melting zone, characterised in that in the edge zones (9) of the socket body (1) extending from the end faces of the socket up to approximately in the middle of the melting zone (11), there is introduced at least one cutout in the material (14, 15, 16) extending over the entire periphery of the socket body or several material cutouts (18, 21, 23, 25) are introduced distributed over the same.

2. Socket according to Claim 1, characterised in that the material cutouts consist, in each case, of a slot (14) or a groove (15) in the boundary region of the melting zone (11).

3. Socket according to Claim 2, characterised in that, with several slots (16), these are constructed with the same or different slot depths (16', 16'', 16''').

4. Socket according to Claim 1, characterised in that in the edge zones (9), axial cutouts (18, 21) or axial recesses (23) extending through the wall thickness of the socket body (1) are arranged, wherein posts (20, 22, 24) lie between the cutouts or recesses.

5. Socket according to Claim 4, characterised in that the cutouts (18, 21) arranged in the edge zones (9) and the recesses (23) extend up to the end faces of the socket body (1).

6. Process for operating a socket according to one of Claims 1 to 6, characterised in that for the optical indication of a correctly functioning running of the welding process between the socket body and the conduit parts, a change of shape is determined at the position of the material cutouts by a change of the dimensions, e.g. of the slot depth and/or slot width.

## Revendications

1. Manchon soudable électriquement, destiné à assembler des éléments de tuyauterie en matière thermoplastique, qui comporte un corps de manchon (1) en forme de douille, en matière thermoplastique, un élément de chauffage électrique (2, 3), noyé dans la paroi intérieure du corps de manchon et des connexions pour l'arrivée d'énergie électrique à l'élément de chauffage, l'énergie électrique envoyée à l'élément de chauffage électrique servant à produire de la chaleur, pour former une zone de fusion (11) destinée à souder le corps de manchon avec les parties des éléments de tuyauterie (5, 6), se trouvant dans la zone de fusion, caractérisé en ce que dans les zones de bordure (9) du corps de manchon (1), s'étendant depuis les faces frontales de manchon jusqu'au milieu à peu près des zones de fusion (11), il est prévu au moins un évidement de matière (14, 15, 16) s'étendant sur la totalité du pourtour du corps de manchon ou plusieurs évidements de matière (18, 21, 23, 25) répartis sur celui-ci.

2. Manchon selon la revendication 1, caractérisé en ce que chaque évidement de matière est constitué d'une gorge (14) ou d'une rainure (15) dans la région limite de la zone de fusion (11).

3. Manchon selon la revendication 2, caractérisé en ce que dans le cas où il est prévu plusieurs gorges (16), celles-ci ont une profondeur (16', 16"; 16'") égale ou différente.

4. Manchon selon la revendication 1, caractérisé en ce qu'il est pratiqué, dans les zones de bordure (9), des évidements axiaux (18, 21) ou des entailles (23) axiales, s'étendant dans l'épaisseur de paroi du corps de manchon (1), des cloisons (20, 22, 24) se situant entre les évidements et les entailles.

5. Manchon selon la revendication 4, caractérisé en ce que les évidements (18, 21) et les entailles (23) disposées dans les zones de bordure, (9), s'étendent jusqu'aux faces frontales du corps de manchon (1).

6. Procédé pour la mise en oeuvre d'un manchon selon l'une des revendications 1 à 6, caractérisé en ce qu'une variation de la forme, à l'endroit des évidements de matière, est constatée par une variation des dimensions, par exemple de la profondeur de gorge et/ou la largeur de gorge, en vue de l'indication optique d'un bon déroulement du soudage entre le corps de manchon et les éléments de tuyauterie.

EP 0 183 189 B1

FIG. 1

FIG. 2

FIG. 3

FIG. 4

FIG. 5

FIG. 6

FIG. 7

FIG. 8

FIG. 9

FIG. 10

FIG. 13

FIG. 11

FIG. 12